# EUROPÄISCHE PATENTSCHRIFT

(11) **EP 1 517 808 B1**
(45) Veröffentlichungstag und Bekanntmachung des Hinweises auf die Patenterteilung: **11.03.2009**
(21) Anmeldenummer: 03761571.3
(22) Anmeldetag: 01.07.2003
(51) Int. Cl.: B60J 5/04

(54) **KRAFTFAHRZEUGTÜR MIT EINER VON DEM MODULTRÄGER GEHALTENEN FENSTERHEBESCHIENE**
MOTOR VEHICLE DOOR COMPRISING A WINDOW-LIFTING RAIL RETAINED BY A MODULE SUPPORT
PORTIERE DE VEHICULE AUTOMOBILE COMPORTANT UN RAIL DE LEVE-VITRE MAINTENU PAR LE SUPPORT DE MODULE

(30) Priorität: 01.07.2002 DE 10230073
(43) Veröffentlichungstag der Anmeldung: 30.03.2005
(73) Patentinhaber: Faurecia Innenraum Systeme GmbH, 76767 Hagenbach (DE)
(72) Erfinder: ZIMMERMANN, Eric, 34132 Kassel (DE); SCHMELZ, Thomas, 34266 Niestetal (DE); SCHLIWA, Enrico, 99817 Eisenach (DE)
(74) Vertreter: Pfenning, Meinig & Partner GbR
(86) Internationale Anmeldenummer: PCT/EP2003/006993
(87) Internationale Veröffentlichungsnummer: WO 2004/002766

(56) Entgegenhaltungen:
- EP-A- 1 129 875
- DE-A- 4 432 381
- DE-A- 19 723 642

## Beschreibung

Die vorliegende Erfindung betrifft eine Kraftfahrzeugtür.

Es sind verschiedene Bauformen von Kraftfahrzeugtüren bekannt. So sind z.B. Kraftfahrzeugtüren mit einer darin beweglichen Fensterscheibe sowie mindestens einer Fensterheberschiene zur Führung der Fensterscheibe bekannt.

Darüber hinaus ist es bekannt, im Inneren der Kraftfahrzeugtür einen meist aus Kunststoff ausgeführten Modulträger anzubringen, auf welchem verschiedene Funktionselemente gemeinsam untergebracht werden können, wie z.B. Lautsprecher etc. Dieser Modulträger dient außerdem zur Trennung des Nass-Bereichs vom zu dem Innenraum hin orientierten Trockenbereich' des Innenraums der Tür.

Auch wenn der Modulträger bereits eine beträchtliche Verringerung des Montageaufwands bewirkt, ist im Zusammenspiel mit der mindestens einen Fensterheberschiene noch ein beträchtlicher Montageaufwand gegeben. Üblicherweise wird die mindestens eine Fensterheberschiene mit mehreren Schrauben an den Modulträger gekoppelt (quasi als Transportsicherung). Die eigentliche Montage der Fensterheberschiene erfolgt dann über mehrere Schrauben an die meist metallische Grundstruktur einer Tür, und zwar an das sogenannte "Türinnenblech", an welchem auch der Modulträger üblicherweise fixiert wird.

Auch ist aus der EP 1 129 875 A2 bekannt, die Fensterheberschiene am Modulträger zu befestigen.

Der vorliegenden Erfindung liegt die Aufgabe zugrunde, eine Kraftfahrzeugtür zu schaffen, welche gegenüber bekannten Kraftfahrzeugtüren einen verminderten Montageaufwand aufweist und daher kostengünstiger in der Herstellung ist.

Diese Aufgabe wird durch eine Kraftfahrzeugtür nach Anspruch 1 gelöst.

Dadurch, dass bei einer gattungsgemäßen Kraftfahrzeugtür der Modulträger und/oder die Fensterheberschiene mindestens eine Aufnahme zum formschlüssigen Halten der Fensterheberschiene im Modulträger aufweist, wird sichergestellt, dass die Fensterheberschiene zum Modulträger eine klar definierte Position einnimmt, welche im Wesentlichen unabhängig ist von zusätzlichen kraftschlüssigen Elementen, wie z.B. Schrauben.

Durch die formschlüssige Aufnahme wird sichergestellt, dass die Fensterheberschiene, welche auch das Gewicht der relativ schweren Fensterscheibe trägt, im Modulträger gehalten und von diesem abgestützt wird.

Es ist nicht notwendig, dass durch starkes Anziehen von Schrauben senkrecht zur Hochachse des Fahrzeugs die Fensterheberschiene getragen wird oder dass gar eine Befestigung der Fensterheberschiene unmittelbar an Elementen des Türinnenblechs stattfinden muss.

Die Vorteile der erfindungsgemäßen Lösung liegen somit in einer erheblichen Vereinfachung der Montage des Fensterhebersystems auf dem Modulträger, die auftretenden Kräfte werden hierbei von dem Modulträger aufgenommen. Es wird eine deutliche Erhöhung des Integrationsgrades auf dem Modulträger und eine damit verbundene Erhöhung der Wertschöpfung erreicht.

Vorteilhafte Weiterbildungen der vorliegenden Erfindung werden in den abhängigen Ansprüchen angegeben.

Eine vorteilhafte Weiterbildung der Erfindung sieht vor, dass eine zusätzliche Verschraubung zur Fixierung der Fensterheberschiene am Modulträger vorgesehen ist. Hierdurch wird eine dauerhafte Fixierung der Fensterheberschiene am Modulträger erreicht, wobei diese Verschraubung regelmäßig keine Gewichtskräfte der Fensterheberschiene aufnehmen muss, sondern primär der Fixierung in horizontaler Richtung (also senkrecht zur Fahrzeughochachse) aufnehmen muss. Hierbei bietet es sich an, kostengünstige Kunststoff-Direktverschraubungen (selbstschneidende Schrauben) vorzusehen, d.h. die Richtung der Schrauben kann hierbei sowohl in Richtung der Fahrzeughochachse, als auch senkrecht hierzu bzw. auch in anderen Raumrichtungen erfolgen.

Eine besonders vorteilhafte Weiterbildung sieht vor, dass die Fensterheberschiene und/oder der Modulträger Stifte zur gegenseitigen Zentrierung und zum Stützen der Fensterheberschiene vorgesehen sind.

Hierbei handelt es sich um beispielhafte Elemente zum formschlüssigen Aufnehmen der Fensterheberschiene in dem Modulträger. Selbstverständlich ist es auch möglich, die Fensterheberschiene auf Absätzen des Modulträgers bzw. in hierfür vorgesehenen Taschen des Modulträgers abzustützen, um somit die Kräfte der Fensterheberschiene, insbesondere die vertikalen Gewichtskräfte, aufzunehmen.

Hierbei ist es vorteilhaft, dass für eine Fensterheberschiene jeweils zwei Stifte vorgesehen sind. Hierbei ist es günstig, dass ein Stift im Übermaß zur Grobpositionierung der Fensterheberschiene bezüglich des Modulträgers dient und der andere genau formschlüssig ist zur Aufnahme der vertikalen Kräfte.

Es sind verschiedene Ausführungsformen von Fensterheberschienen möglich. So ist es regelmäßig vorgesehen, dass die Fensterheberschienen im Wesentlichen vertikal, d.h. in Richtung der Fahrzeughochachse (unter Umständen mit einer konstruktionsbedingten Neigung) verlaufen. Hierbei können ein oder auch zwei Fensterheberschienen pro Kraftfahrzeugtür vorgesehen sein, welche zur Führung bzw. Aufnahme des Gewichts der damit verbundenen Fenster dienen.

Hierbei sind verschiedene Materialausführungen möglich. So ist es möglich, dass die Fensterheberschienen aus Metall sind, z.B. aus durch Tiefziehvorgänge verformtem Metallblech, z.B. Stahlblech oder auch aus Aluminiumdruckguss. Alternativ ist es auch möglich, die Fensterheberschienen aus Kunststoff zu gestalten.

Der Modulträger ist regelmäßig aus Kunststoff, hier bietet sich PP-LGF (Polypropylen-Langfasermaterial) an.

Die erfindungsgemäße Kopplung zwischen Fensterheberschienen und Modulträger bietet sich für verschiedene Türkonzepte an.

Bei einem Konzept weist die Kraftfahrzeugtür eine Grundstruktur aus tiefgezogenen Metallblechprofilen auf, wobei eine Außenhaut zum Türabschluss nach außen hin gegeben ist und mindestens ein näher zum Kraftfahrzeugraum hin angeordnetes Türinnehblech zur Fixierung des Modulträgers vorgesehen ist. Hierbei stellt das Türinnenblech quasi den linken Umfangsbereich dar, welcher den Modulträger "einrahmt". Entlang dieses Umfangsbereichs findet auch die Abdichtung gegen Flüssigkeitsdurchtritt statt. Es ist besonders vorteilhaft, dass bei der Erfindung keine direkte Verbindung zwischen Fensterheberschiene und Türinnenblech gegeben sein muss. Durch ein derartiges Erfordernis würde das Türinnenblech teurer in der Herstellung, die Montage des Modulträgers würde außerdem sehr erschwert werden.

Das erfindungsgemäße Konzept ist jedoch auch für andere Kraftfahrzeugtürtypen anwendbar. So gibt es Türen, welche einen Rahmen aufweisen. Hierbei ist auf der vom Kraftfahrzeuginnenraum wegweisenden Außenseite sowie auf der zum Kraftfahrzeuginnenraum hin angeordneten Innenseite jeweils eine Beplankung des Rahmens gegeben. In diesem Falle ist der Modulträger am Rahmen befestigt und die Fensterheberschienen können allein am Modulträger befestigt sein, eine direkte Kopplung der Fensterheberschienen mit dem Rahmen bzw. Teilen der Beplankung ist nicht notwendig.

Weitere vorteilhafte Weiterbildungen werden in den übrigen Ansprüchen angegeben.

Die Erfindung wird nun anhand mehrerer Figuren erläutert. Es zeigen:
- Fign. 1a bis 1d: mehrere Ansichten einer ersten Ausführungs- form einer erfindungsgemäßen Kraftfahrzeug- tür,
- Fig. 2: eine Draufsicht auf einen erfindungsgemäßen Modulträger im eingebauten Zustand,
- Fign. 3a bis 3c: Einzelheiten einer zweiten Ausführungsform einer erfindungsgemäßen Kraftfahrzeugtür.

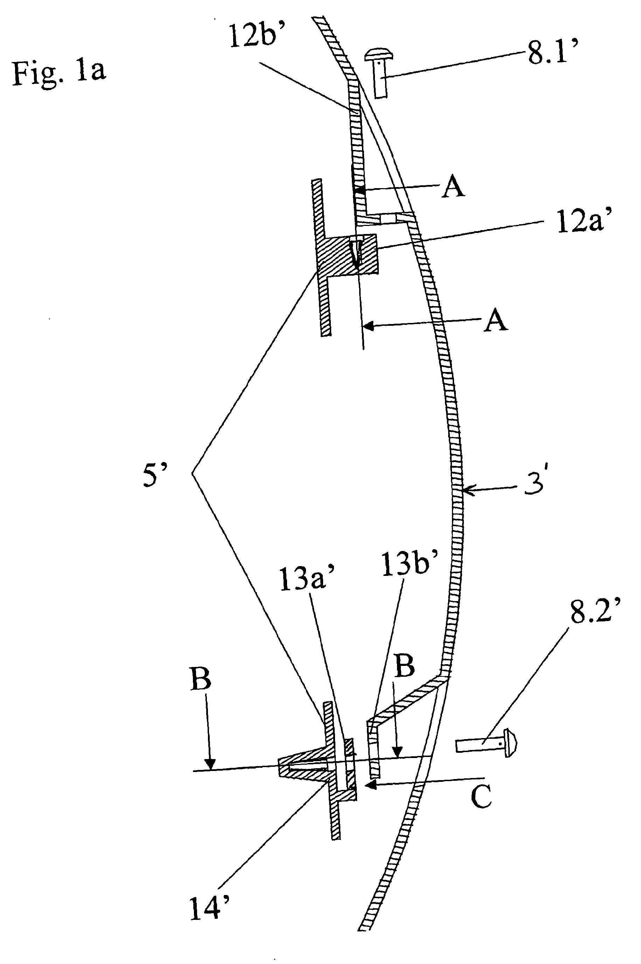

Fig. 1a zeigt die Verwirklichung der Erfindung an einem ersten Ausführungsbeispiel einer Kraftfahrzeugtür. Gezeigt sind hier lediglich Ausschnitte einer Fensterheberschiene 3', welche an Teilen eines Modulträgers 5' befestigbar ist. Der Modulträger 5' weist zwei Aufnahmen auf, wobei die erste als Vorsprung 12a' und die zweite als sackartige Aufnahme 13a' ausgeführt ist. Die Aufnahme 12a' weist eine vertikal verlaufende, d.h. in Fahrzeughochachsenrichtung verlaufende, Bohrung auf. Zur Befestigung der Fensterheberschiene 3' unmittelbar an dem Modulträger 5' wird eine Schraube 8.1' durch eine Bohrung im Bereich 12b' der Fensterheberschiene 3' gesteckt und in der Bohrung der Aufnahme 12a' verschraubt. Durch das Abstützen der treppenartigen Abstützung 12b' auf der Aufnahme 12a' werden die vertikalen Gewichtskräfte der Fensterheberschiene 3' von dem Modulträger 5' aufgenommen.

Die Fensterheberschiene 3' wird zusätzlich an einer zweiten Stelle mit dem Modulträger 5' verbunden. Hierzu weist der Modulträger 5' eine sackartige Aufnahme 13a' auf. In diese sackartige Aufnahme ist ein Vorsprung 13b', welcher im unteren Bereich der Fensterheberschiene 3' hervorspringt, positionierbar. Hierbei wird durch die sackartige Form der Aufnahme 13a' Gewichtskraft der Schiene 3' aufgenommen. Der Vorsprung 13b' sowie die Aufnahme 13a' weisen fluchtende Bohrungen auf zum Durchführen einer Schraube 8.2', welche in einer sackartigen Aufnahme 14' verschraubbar sind.

Es sei darauf hingewiesen, dass die Verschraubung hier auf beliebige Arten geschehen kann. Die Richtung der Schraubung kann entweder in Richtung der Hochachse (siehe 12a') oder auch senkrecht dazu, also horizontal (siehe 13a') erfolgen. Als Schrauben können Metall- oder Kunststoffschrauben vorgesehen sein, welche z.B. selbstschneidend in den Modulträger 5' einschraubbar sind.

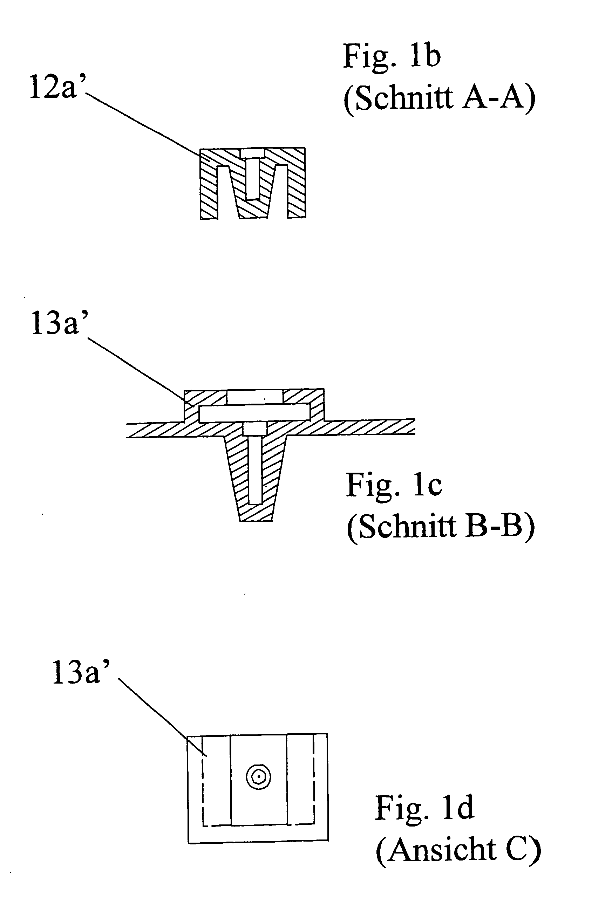

Fig. 1b zeigt einen Schnitt gemäß A-A durch die Aufnahme 12a'. Fig. 1c zeigt einen Schnitt gemäß B-B durch die Aufnahme 13a'. Hierbei sind außerdem seitliche Führungsschienen zur Aufnahme des Vorsprungs 13b' gezeigt, dieses Detail ist auch aus Fig. 1d (eine Ansicht gemäß C) ersichtlich.

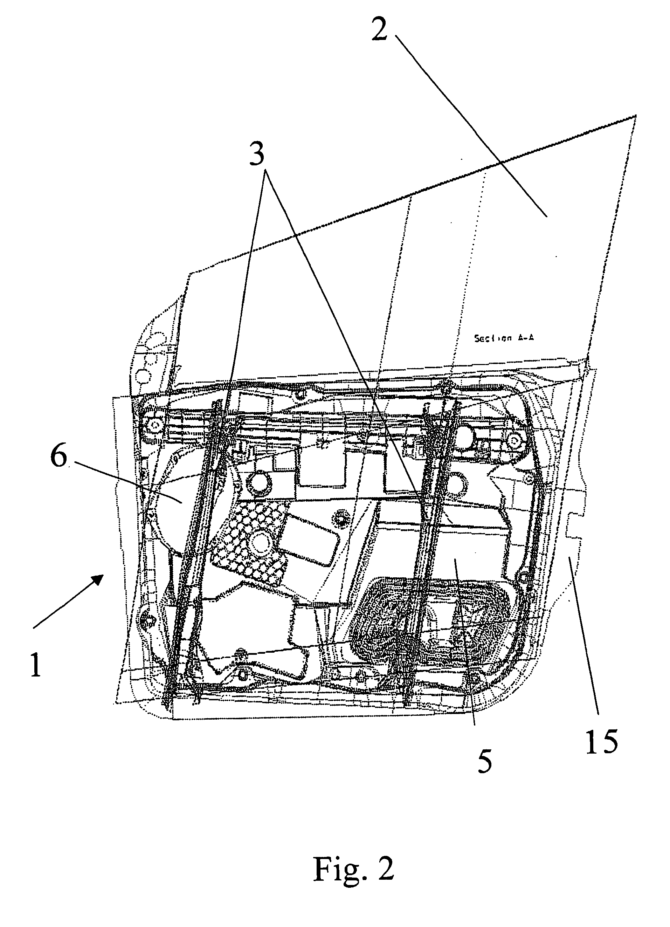

Fig. 2 zeigt den Gesamtaufbau einer erfindungsgemäßen Kraftfahrzeugtür. Diese weist eine Grundstruktur 15 aus tiefgezogenen Stahlblechen auf. Im inneren Hohlraum 4 dieser Grundstruktur ist ein Modulträger 5 untergebracht, welcher umlaufend an einem Türinnenblech der Grundstruktur 15 flüssigkeitsdicht angebracht ist. Der Modulträger weist Aufnahmen für verschiedene Funktionselemente, z.B. für Lautsprecher 6 auf. Auf der dem Kraftfahrzeuginnenraum abgewandten Seite des Modulträgers sind zwei Fensterheberschienen 3 angebracht. Diese sind im Wesentlichen parallel zueinander angeordnet und im Wesentlichen in Richtung der Hochachse des Kraftfahrzeuges angeordnet. Die Fensterheberschienen dienen der Führung der Fensterscheibe 2 über einen nicht näher dargestellten Schieber- bzw. Seilzugmechanismus. Es ist bemerkenswert, dass bei der hier gezeigten Tür die Fensterheberschienen 3 unmittelbar und ausschließlich am Modulträger 5 und nicht noch zusätzlich am zu der Grundstruktur 15 gehörenden Türinnenblech angebracht sind.

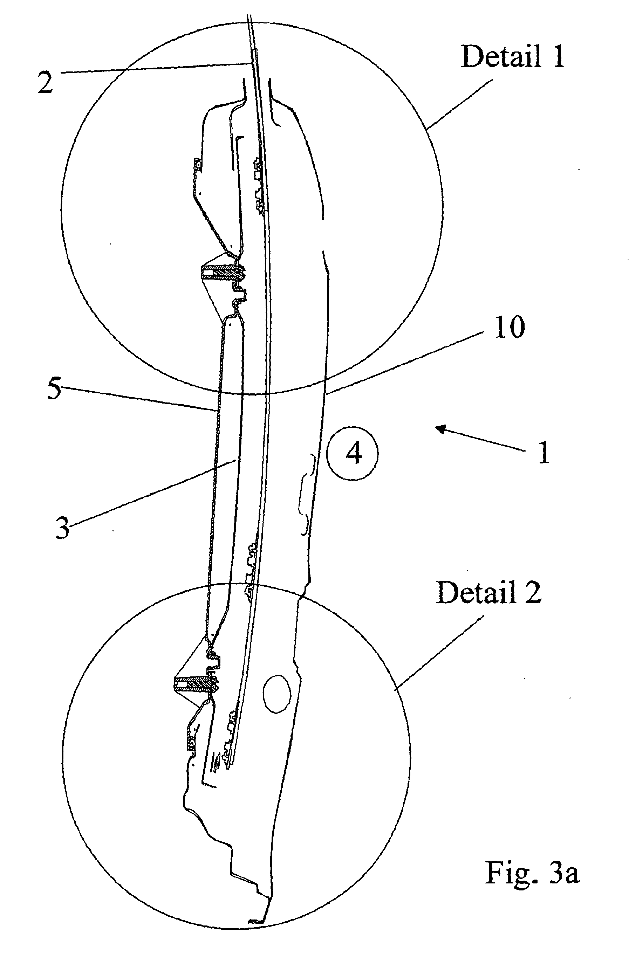

Fign. 3a bis 3c zeigen eine weitere Ausführungsform einer erfindungsgemäßen Kraftfahrzeugtür.

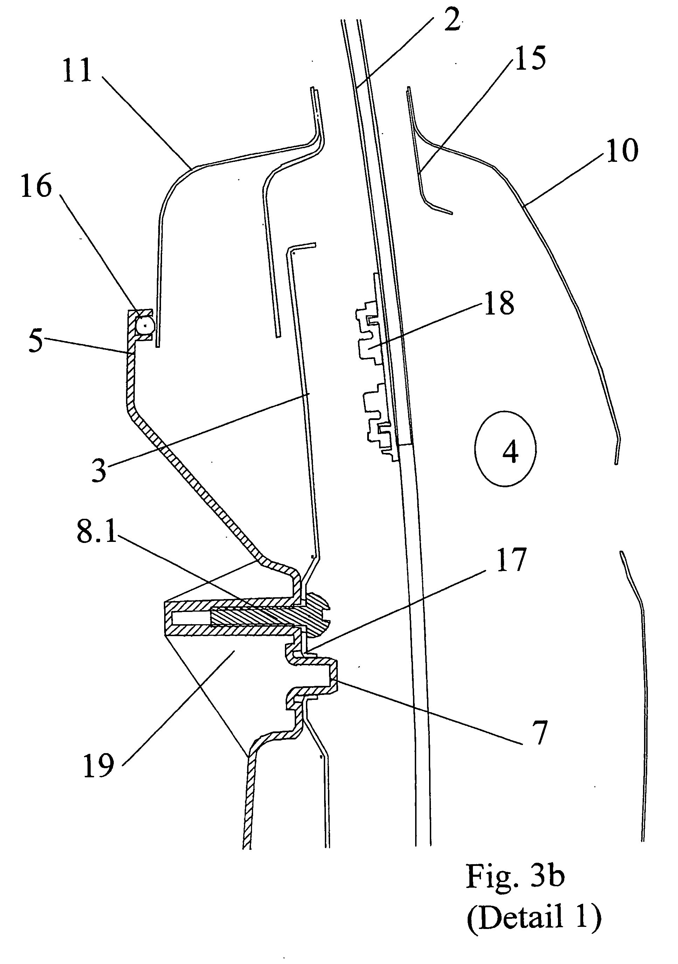

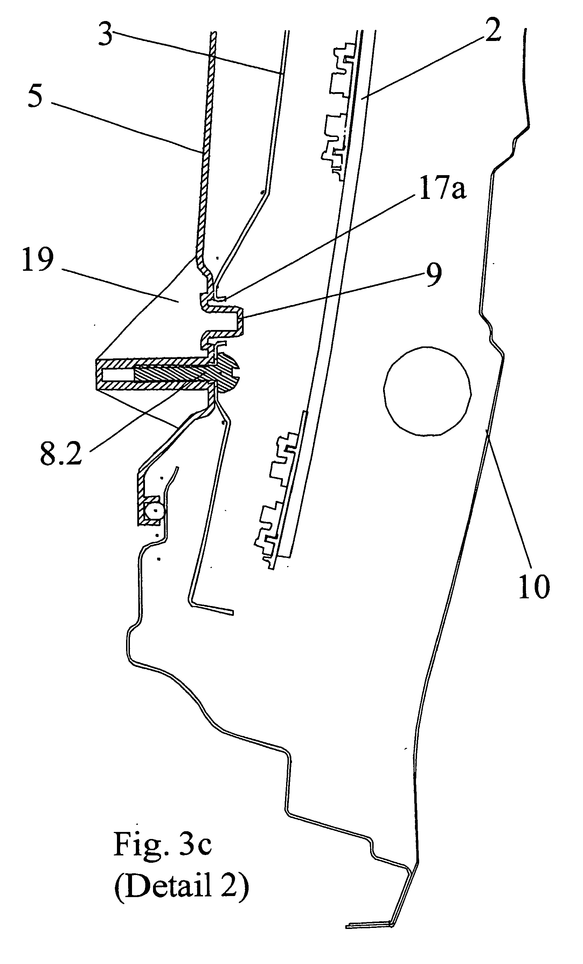

Fig. 3a zeigt einen Schnitt durch eine Kraftfahrzeugtür 1 mit einer darin beweglichen Fensterscheibe 2 sowie einer Fensterheberschiene 3 zur Führung der Fensterscheibe sowie mit einem im Innenraum (4) der Kraftfahrzeugtür angebrachten Modulträger 5 zur Aufnahme von Elementen wie Lautsprecher (siehe Fig. 2) oder dergleichen. Die Fensterheberschiene 3 ist im Modulträger 5 formschlüssig gehalten. Einzelheiten der Befestigung von Fensterheberschiene und Modulträger sind in Detail 1 (Fig. 3b) und Detail 2 (Fig. 3c) gezeigt.

Fig. 3b zeigt eine vergrößerte Darstellung von Detail 1 (siehe Fig. 3a). Hierin ist die Grundstruktur 15 der Kraftfahrzeugtür erkennbar, welche aus tiefgezogenen Blechabschnitten besteht. So weist diese Grundstruktur eine Außenhaut 10 auf, welche den seitlichen Abschluss der Tür nach außen hin bildet. Außerdem weist die Grundstruktur 15 ein Türinnenblech 11 auf, welches in etwa rahmenartig im Umfangsbereich der Grundstruktur 15 verläuft. Der Modulträger 5 weist eine Dichtlippe 16 auf, welche im Wesentlichen umlaufend mit dem Türinnenblech 11 verbindbar ist. Die Fensterheberschiene 3 stützt in der eingebauten Position eine Fensterscheibe 2 mit einer daran angebrachten Haltevorrichtung 18 zum Führen bzw. Halten der Fensterscheibe 2 bezüglich der Fensterheberschiene 3.

Die Fensterheberschiene 3 ist über eine Schraube 8.1 mit dem Trägermodul 5 verschraubt. Hierzu weist das Trägermodul 5 eine aus Kunststoff bestehende sackartige Aufnahme auf, die sackartige Aufnahme ist durch eine Verstärkungsstrebe mit übrigen Trägermodul verbunden. Die Fensterheberschiene 3 weist eine lochartige Aufnahme 17 auf. Diese hat einen im Wesentlichen runden Querschnitt. In diese Aufnahme 17 ist ein im Wesentlichen zylinderförmiger Stift 7 formschlüssig eingepasst, so dass die Fensterheberschiene 3 am Modulträger 5 positioniert ist. Die Schraube 8.1 übernimmt hierbei lediglich die Aufgabe der Fixierung, d.h. das Beibehalten der Position, die gewichtsmäßige Aufnahme erfolgt im Wesentlichen über den Stift 7.

Fig. 3c zeigt eine vergrößerte Ansicht von Detail 2 (siehe Fig. 3a).

Hierin ist der zweite Befestigungspunkt zwischen Fensterheberschiene 3 und Modulträger 5 aus Fig. 3a zu sehen. Die Fensterheberschiene aus Fig. 3a ist im Wesentlichen vertikal, also in Fahrzeughochachsenrichtung, angeordnet, wobei in ihrem oberen Abschnitt (siehe Detail 1) ein Befestigungspunkt ist und in ihrem unteren Abschnitt ein zweiter Befestigungspunkt (siehe Detail 2) gegeben ist.

Auch in Fig. 3c ist eine Schraube 8.2 gezeigt, welche in eine sackartige Aufnahme des Modulträgers 5 eingreift. Die sackartige Aufnahme ist durch eine Verstärkungsrippe 19, welche im Wesentlichen senkrecht auf der Modulträgergrundebene steht, verstärkt. Diese Rippe durchläuft außerdem den Stift 9, welcher ebenfalls aus der Modulträgergrundebene herausragt, so dass dieser hierdurch zusätzlich verstärkt wird (dasselbe gilt entsprechend für den Stift 7 aus Fig. 3b). Der Stift 9 weist jedoch im Unterschied zum Stift 7 gegenüber der korrespondierenden Aufnahme (hier Aufnahme 17a) ein Untermaß auf. Hierdurch wird es möglich, während des Montagevorgangs eine Zentrierung der Fensterheberschiene zu erreichen, das eigentliche Halten bzw. Positionieren erfolgt jedoch über den Stift 7. Die Schraube 8.2 übernimmt, wie bereits die Schraube 8.1 lediglich die Aufgabe, die Fensterheberschiene 3 horizontal zu fixieren, die Halteaufgabe wird durch den Stift 7 gelöst.

## Patentansprüche

1. Kraftfahrzeugtür (1) mit einer darin beweglichen Fensterscheibe (2) sowie mindestens einer Fensterheberschiene (3) zur Führung der Fensterscheibe, wobei im Innenraum (4) der Kraftfahrzeugtür ein Modulträger (5) zur Aufnahme von Elementen wie Lautsprechern (6) oder dergleichen angebracht ist und wobei der Modulträger (5) und/oder die Fensterheberschiene (3) mindestens eine Aufnahme (17) zum formschlüssigen Halten der Fensterheberschiene im Modulträger aufweist, wobei die Fensterheberschiene zum Modulträger eine klar definierte Position einnimmt, und wobei der Modulträger mindestens eine Aufnahme zum Aufnehmen der vertikalen Gewichtskräfte der Fensterheberschiene aufweist **dadurch gekennzeichnet, dass** der Modulträger auch eine in Richtung der Fahrzeug-Hochachse verlaufende Verschraubung zur Fixierung der Fensterheberschiene aufweist zum Sicherstellen, dass diese Verschraubung keine Gewichtskräfte der Fensterheberschiene aufnehmen muss.

2. Kraftfahrzeugtür nach Anspruch 1, **dadurch gekennzeichnet, dass** eine zusätzliche Verschraubung zur Fixierung der Fensterheberschiene (3) am Modulträger (5) gegeben ist.

3. Kraftfahrzeugtür nach einem der vorhergehenden Ansprüche, **dadurch gekennzeichnet, dass** die Fensterheberschiene (3) und/oder der Modulträger (5) Stifte (7, 8) zur gegenseitigen Zentrierung und zum Stützen der Fensterheberschiene (3) aufweisen.

4. Kraftfahrzeugtür nach Anspruch 3, **dadurch gekennzeichnet, dass** für eine Fensterheberschiene (3) jeweils zwei Stifte (7, 9) vorgesehen sind (Fig. 3a).

5. Kraftfahrzeugtür nach einem der vorhergehenden Ansprüche, **dadurch gekennzeichnet, dass** ein oder zwei Fensterheberschienen (3) pro Tür vorgesehen sind.

6. Kraftfahrzeugtür nach einem der vorhergehenden Ansprüche, **dadurch gekennzeichnet, dass** die Fensterheberschiene (3) aus Metall ist.

7. Kraftfahrzeugtür nach einem der vorhergehenden Ansprüche, **dadurch gekennzeichnet, dass** der Modulträger (5) aus Kunststoff ist.

8. Kraftfahrzeugtür nach einem der vorhergehenden Ansprüche, **dadurch gekennzeichnet, dass** die Tür (1) eine Grundstruktur (15) aus Tiefzieh-Profilen aufweist, wobei eine Außenhaut (10) zum Türabschluss nach außen gegeben ist und mindestens ein näher zum Kraftfahrzeuginnenraum hin angeordnetes Türinnenblech (11) zur Fixierung des Modulträgers vorgesehen ist.

9. Kraftfahrzeugtür nach einem der Ansprüche 1 bis 7, **dadurch gekennzeichnet, dass** die Tür einen Rahmen aufweist, welcher an seiner von dem Kraftfahrzeuginnenraum abweisenden Seite sowie auf seiner zu dem Kraftfahrzeuginnenraum hinweisenden Seite jeweils eine Beplankung aufweist.

## Claims

1. A motor vehicle door (1) having a window pane (2) movable therein as well as at least one window-lifter rail (3) to guide the window pane, wherein a module mounting (5) to receive elements such as speakers (6) or the like is mounted in the interior (4) of the motor vehicle door and wherein the module mounting (5) and/or the window-lifter rail (3) has/have at least one receiver (17) to hold the window-lifter rail in the module mounting in a positive-locking manner, wherein the window-lifter rail occupies a clearly defined position in relation to the module mounting, and wherein the module mounting has at least one receiver to receive the vertical weight forces of the window-lifter rail, **characterised in that** the module mounting also has a screw connection which runs in the direction of the vehicle vertical axis and which is for fixing the window-lifter rail, in order to ensure that this screw connection does not have to absorb any weight forces of the window-lifter rail.

2. A motor vehicle door according to claim 1, **characterised in that** an additional screw connection is provided to fix the window-lifter rail (3) to the module mounting (5).

3. A motor vehicle door according to any one of the preceding claims, **characterised in that** the window-lifter rail (3) and/or the module mounting (5) have pins (7, 8) for reciprocal centring and for supporting the window-lifter rail (3).

4. A motor vehicle door according to claim 3, **characterised in that** two pins (7, 9) are provided for each window-lifter rail (3) (Fig. 3a).

5. A motor vehicle door according to any one of the preceding claims, **characterised in that** one or two window-lifter rails (3) per door are provided.

6. A motor vehicle door according to any one of the preceding claims, **characterised in that** the window-lifter rail (3) is made of metal.

7. A motor vehicle door according to any one of the preceding claims, **characterised in that** the module mounting (5) is made of plastics material.

8. A motor vehicle door according to any one of the preceding claims, **characterised in that** the door (1) has a basic structure (15) of deep-drawn shaped parts, an outer skin (10) to close the door off outwards being provided and at least one door inner panel (11), arranged closer towards the motor vehicle interior, being provided for fixing of the module mounting.

9. A motor vehicle door according to any one of claims 1 to 7, **characterised in that** the door has a frame which at its side directed away from the motor vehicle interior as well as on its side directed towards the motor vehicle interior has a covering in each case.

## Revendications

1. Porte de véhicule automobile (1) avec une vitre de fenêtre (2) mobile à l'intérieur ainsi qu'au moins un rail lève-vitre (3) pour guider la vitre de fenêtre, un porte-module (5) destiné à recevoir des éléments tels que haut-parleurs (6) ou similaires étant placés dans le volume intérieur (4) de la porte de véhicule automobile, et le porte-module (5) et/ou le rail lève-vitre (3) présentant au moins un logement (17) pour maintenir par complémentarité de formes le rail lève-vitre dans le porte-module, le rail lève-vitre prenant une position clairement définie par rapport au porte-module, et le porte-module présentant au moins un logement pour absorber les forces de poids verticales du rail lève-vitre, **caractérisé en ce que** le porte-module présente aussi un vissage s'étendant dans la direction de l'axe vertical du véhicule pour fixer le rail lève-vitre, afin d'assurer que ce vissage ne doive pas absorber les forces de poids du rail lève-vitre.

2. Porte de véhicule automobile selon la revendication 1, **caractérisée en ce qu'**il est prévu un vissage supplémentaire pour fixer le rail lève-vitre (3) sur le porte-module (5).

3. Porte de véhicule automobile selon l'une quelconque des revendications 1 ou 2, **caractérisée en ce que** le rail lève-vitre (3) et/ou le porte-module (5) comporte des tétons (7,8) pour le centrage réciproque et pour l'appui du rail lève-vitre (3).

4. Porte de véhicule automobile selon la revendication 3, **caractérisée en ce que** deux tétons (7, 9) sont prévus chaque fois pour un rail lève-vitre (3) (fig. 3a).

5. Porte de véhicule automobile selon l'une quelconque des revendications 1 à 4, **caractérisée en ce qu'**il est prévu un ou deux rails lève-vitre (3) par porte.

6. Porte de véhicule automobile selon l'une quelconque des revendications 1 à 5, **caractérisée en ce que** le rail lève-vitre (3) est en métal.

7. Porte de véhicule automobile selon l'une quelconque des revendications 1 à 6, **caractérisée en ce que** le porte-module (5) est en matière plastique.

8. Porte de véhicule automobile selon l'une quelconque des revendications 1 à 7, **caractérisée en ce que** la porte (1) comporte une structure de base (15) en profilés obtenus par emboutissage profond, une enveloppe extérieure (10) étant prévue pour fermer la porte vers l'extérieur ainsi qu'au moins une tôle intérieure de porte (11), disposée plus près vers l'habitacle du véhicule automobile, pour la fixation du porte-module.

9. Porte de véhicule automobile selon l'une quelconque des revendications 1 à 7, **caractérisée en ce que** la porte comporte un cadre qui présente un revêtement sur sa face tournée à l'opposé du volume intérieur du véhicule automobile ainsi que sur sa face tournée vers le volume intérieur du véhicule automobile.
